# EUROPEAN PATENT SPECIFICATION

(11) **EP 3 484 721 B1**
(45) Date of publication and mention of the grant of the patent: **03.03.2021**
(21) Application number: 17828386.7
(22) Date of filing: 12.07.2017
(51) Int. Cl.: B60C 9/18, B60C 9/28, B60C 11/00, B60C 11/04, B60C 9/20

(54) **TIRE WITH LAMINATE**
REIFEN MIT LAMINAT
PNEU DOTÉ DE STRATIFIÉ

(30) Priority: 13.07.2016 US 201662361555 P
(43) Date of publication of application: 22.05.2019
(73) Proprietor: Bridgestone Americas Tire Operations, LLC, Nashville, TN 37201 (US)
(72) Inventor: ROJAS, Pablo M., Franklin, Tennessee 37069 (US); RAJE, Nihar N., Uniontown, Ohio 44685 (US); SHMAGRANOFF, Aleksandr I., Akron, Ohio 44319 (US)
(74) Representative: Kraus & Weisert Patentanwälte PartGmbB
(86) International application number: PCT/US2017/041717
(87) International publication number: WO 2018/013691

(56) References cited:
- EP-A1- 2 705 961
- EP-A2- 0 921 019
- US-A1- 2003 213 539
- US-A1- 2004 069 386
- US-A1- 2007 084 533
- US-A1- 2013 276 944
- US-A1- 2014 034 200

## Description

### FIELD OF INVENTION

The present disclosure is directed to tires having multiple reinforcing belts which include a laminate, lamella, or overlay that reduces internal temperatures within the tire, enhances rolling resistance, and improves tire durability. More particularly, the present disclosure is directed to tires having a laminate, lamella, or overlay disposed above multiple reinforcing belts. The tire embodiments of the present disclosure may be used in various tire applications, including without limitation, truck-and-bus-radial (TBR), heavy-duty, and passenger/light truck (PLTD) tire applications.

### BACKGROUND

Known tires include belts for reinforcement and structural purposes. The belts, in conjunction with other tire components, affect tire performance. Exemplary performance attributes include tire stiffness, rolling resistance, and durability.

A tire according to the preamble of claim 1 is known from EP 2 705 961 A1.

### SUMMARY OF THE INVENTION

According to the invention, a tire comprises a first annular bead and a second annular bead, a body ply extending between the first annular bead and the second annular bead, a belt package, disposed radially above the body ply. The belt package comprises a first annular belt, a second annular belt, and a third annular belt, all of which extend axially across a portion of the body ply. The tire also comprises a circumferential tread, disposed radially above the third annular belt, comprising a tread cap, tread base, and undercushion, all of which extend axially across a portion of the body ply, a first sidewall extending between the first annular bead and a first shoulder, the first shoulder being associated with the circumferential tread, a second sidewall extending between the second annular bead and a second shoulder, the second shoulder being associated with the circumferential tread. The tire further comprises an annular lamella disposed radially between the third annular belt and the tread base, and extending axially across at least 50% of the tread width, wherein the lamella has a tan δ of 0.04-0.09.

In a second embodiment, a tire comprises a tire scaffold, wherein the tire scaffold comprises a base ply, a pair of annular beads, a pair of sidewalls, at least three reinforcing belts, and a rubber casing, a tire tread, affixed to, and disposed radially upward of, the tire scaffold, wherein the tire tread includes at least two main circumferential grooves, at least three circumferential ribs, and a tread base, and a low-rolling-resistance laminate, disposed radially between the reinforcing belts and the tread base.

In a third embodiment, a tire comprises a first annular bead and a second annular bead, a body ply extending between the first annular bead and the second annular bead, a first reinforcing belt, disposed radially above the body ply and extending axially across a portion of the body ply, a second reinforcing belt disposed radially above the first reinforcing belt and extending axially across a portion of the body ply, and a circumferential tread, disposed radially above the reinforcing belts. The circumferential tread comprises a tread cap, tread base, and undercushion, all of which extend axially across a portion of the body ply. The tire also comprises a first sidewall extending between the first annular bead and a first shoulder, the first shoulder being associated with the circumferential tread, and a second sidewall extending between the second annular bead and a second shoulder, the second shoulder being associated with the circumferential tread. The tire further comprises an overlay disposed radially above the reinforcing belts, and extending axially across at least 20% of a tire section width.

### BRIEF DESCRIPTION OF THE DRAWINGS

In the accompanying drawings, structures are illustrated that, together with the detailed description provided below, describe exemplary embodiments of the claimed invention. Like elements are identified with the same reference numerals. It should be understood that elements shown as a single component may be replaced with multiple components, and elements shown as multiple components may be replaced with a single component. The drawings are not to scale and the proportion of certain elements may be exaggerated for the purpose of illustration.
**Figure 1** is a peel-away cross-sectional perspective view of an embodiment of a tire including a laminate;
**Figure 2a** is a close-up cross-sectional view of the tire depicted in **Figure 1****;**
**Figure 2b** is a close-up cross-sectional view of an alternative embodiment of a tire having a laminate;
**Figure 3a** is a peel-away cross-sectional perspective view of one embodiment of a tire including a laminate;
**Figure 3b** is a peel-away cross-sectional perspective view of an alternative embodiment of a tire including a laminate;
**Figure 4a** is a close-up cross-sectional view of another alternative embodiment of a tire including a laminate;
**Figure 4b** is a close-up cross-sectional view of yet another alternative embodiment of a tire including a laminate; and
**Figure 5** is a peel-away cross-sectional perspective view of an embodiment of a tire including a laminate.

### DETAILED DESCRIPTION

The following includes definitions of selected terms employed herein. The definitions include various examples and/or forms of components that fall within the scope of a term and that may be used for implementation. The examples are not intended to be limiting. Both singular and plural forms of terms may be within the definitions.

"Axial" and "axially" refer to a direction that is parallel to the axis of rotation of a tire.

"Circumferential" and "circumferentially" refer to a direction extending along the perimeter of the surface of the tread perpendicular to the axial direction.

"Radial" and "radially" refer to a direction perpendicular to the axis of rotation of a tire.

"Sidewall" as used herein, refers to that portion of the tire between the tread and the bead.

"Tire scaffold" as used herein, refers to both (1) a green tire and (2) a retread tire casing or carcass.

"Tread" as used herein, refers to that portion of the tire that comes into contact with the road or ground under normal inflation and normal load.

"Tread depth" refers to the distance between a top surface of the tread and the bottom of a major tread groove.

"Tread width" refers to the width of the ground contact area of a tread which contacts with the road surface during the rotation of the tire under normal inflation and load.

While similar terms used in the following descriptions describe common tire components, it is understood that because the terms carry slightly different connotations, one of ordinary skill in the art would not consider any one of the following terms to be purely interchangeable with another term used to describe a common tire component. Furthermore, to the extent the term "under" is used in the specification or claims, it is intended to mean not only "directly under" but also "indirectly under" where intermediary tire layers or components are disposed between two identified components or layers.

Directions are stated herein with reference to the axis of rotation of the tire. The terms "upward" and "upwardly" refer to a general direction towards the tread of the tire, whereas "downward" and "downwardly" refer to the general direction towards the axis of rotation of the tire. Thus, when relative directional terms such as "upper" and "lower" or "top" and "bottom" are used in connection with an element, the "upper" or "top" element is spaced closer to the tread than the "lower" or "bottom" element. Additionally, when relative directional terms such as "above" or "below" are used in connection with an element, an element that is "above" another element is closer to the tread than the other element.

The terms "inward" and "inwardly" refer to a general direction towards the equatorial plane of the tire, whereas "outward" and "outwardly" refer to a general direction away from the equatorial plane of the tire and towards the sidewall of the tire. Thus, when relative directional terms such as "inner" and "outer" are used in connection with an element, the "inner" element is spaced closer to the equatorial plane of the tire than the "outer" element.

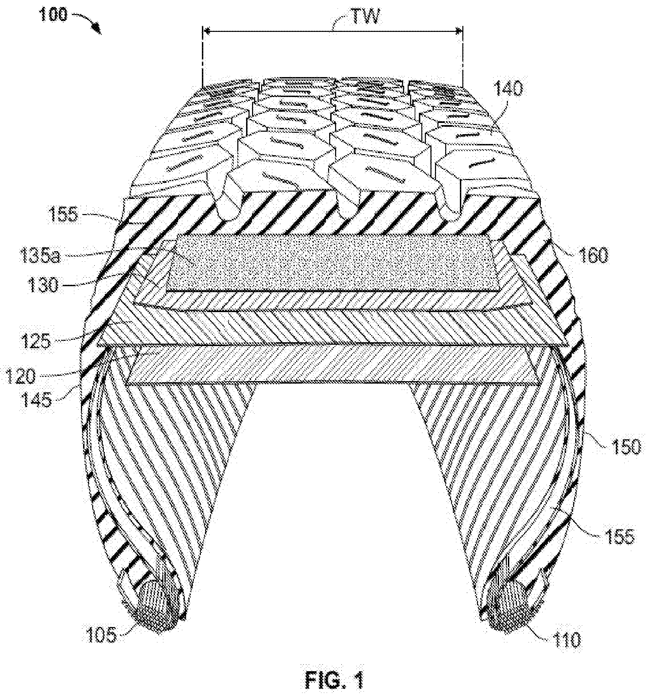

**Figure 1** is a peel-away cross-sectional perspective view of an embodiment of a tire **100** including a laminate. As shown, tire **100** includes a first annular bead **105** and a second annular bead **110.** The annular beads, in part, secure the tire to a wheel. In an alternative embodiment (not shown), the tire comprises four or more beads.

As shown, tire **100** further includes a body ply **115** extending between first annular bead **105** and second annular bead **110.** Body ply **115** forms an annulus and imparts shape to the tire. As one of ordinary skill in the art will understand, body ply **115** may contain reinforcing cords (not labeled) or fabric (not shown). In alternative embodiments (not shown), various turn-up and turn-down configurations, or multiple body plies, are used.

Tire **100** further includes a belt package which comprises a first annular belt **120,** a second annular belt **125,** and a third annular belt **130.** First annular belt **120** is disposed radially upward of body ply **115** and extends axially across a portion of body ply **115.** Second annular belt **125** is disposed radially upward of first annular belt **120** and extends axially across a portion of body ply **115.** Third annular belt **130** is disposed radially upward of second annular belt **125** and extends axially across a portion of body ply **115.** Thus, as shown in **Figure 1****,** tire **100** comprises exactly three belts. As one of ordinary skill in the art will understand, the annular belts may contain steel cords and reinforcing cords (both not shown), and the belt package may further include one or more additional reinforcing plies and cap plies (both also not shown). In an alternative embodiment (not shown), the belt package further comprises a fourth annular belt (thus, in the embodiment shown in **Figure 1****,** the belt package lacks a fourth annular belt).

Tire **100** includes an annular laminate **135a.** As shown, laminate **135a** is disposed radially between third annular belt **130** and a circumferential tread **140.** Laminate **135a** has a generally consistent thickness (although one skilled in the art will appreciate that variable thicknesses exist).

Further, as shown, laminate **135a** extends axially across a portion of body ply **115.** In a first embodiment, the laminate extends axially across 45-110% of the tread width. In a second embodiment, the laminate extends axially across at least 80-110% of the tread width. In a third embodiment, the laminate has an axial width that is 45-80% of a tread width. In particular tire embodiments having three annular belts, the laminate may be disposed radially above the third annular belt. In differing tire embodiments-e.g., in known tire designs having four annular belts-the laminate may replace the fourth annular belt.

Although not shown, in one embodiment, the laminate is formed from an elastomer. When the tire is cured (or re-cured), the laminate forms a non-viscous, vulcanized polymer. Thus, the laminate is not a self-sealing or self-repairing layer. Furthermore, the laminate is not formed from a thermoplastic layer, it is not an adhesive, tackifier, or cement, and it is not specifically configured to conduct electric charge. The laminate does not contain nylon or fabric, and it is not a cap ply.

According to the invention, the laminate is formed from an elastomer having a tan δ of 0.04-0.09. In an alternative embodiment, the laminate is formed from an elastomer having a tan δ of 0.05-0.08. In another alternative embodiment, the laminate is formed from an elastomer having a tan δ of 0.065-0.075. In a particular embodiment, the laminate has a uniform stiffness and is formed from a homogeneous elastomer (although one skilled in the art will appreciate that alternatives exist). Tan δ is determined according to the testing methods described in ASTM D5992 - 96 (Reapproved 2011) ("Standard Guide for Dynmaic Testing of Vulcanized Rubber and Rubber-Like Materials Using Vibratory Methods"). More specifically, tan δ is determined according to one of (1) a forced vibration of a non-resonant system involving only the specimen, (2) free vibration of a resonant system the specimen and a mass, or (3) forced vibration of a resonant system the specimen and a mass, as further described in ASTM D5992 - 96 (Reapproved 2011). Regardless of which testing method is used, tan δ is determined by changing strain conditions from 0-5% at 25°C and identifying the largest value under these conditions.

Furthermore, the laminate reduces strain fields within the tire. In particular, the laminate reduces strains associated with loading and unloading the tire, as the tire moves through its footprint. Accordingly, the laminate reduces internal temperatures within the tire, enhances rolling resistance, and improves tire durability.

Tire **100** further comprises a circumferential tread **140.** Circumferential tread **140** is disposed radially upward of third annular belt **130** (and the belt package) and extends axially across a portion of body ply **115.** Circumferential tread **140** has a width, the tread width, which is denoted as **TW.** As depicted, three zigzag circumferential grooves divide circumferential tread **140** into four ribs. As one of ordinary skill in the art will understand, a circumferential tread may contain additional elements such as, without limitation, sacrificial ribs, sipes, stone ejectors, and tie bars. As one of ordinary skill in the art will also understand, the circumferential tread is affixed to the tire (*e.g.,* by vulcanization) when the tire is new. In an alternative embodiment (not shown), the circumferential tread is affixed as a retread.

Tire **100** further comprises a first sidewall **145** and a second sidewall **150.** First sidewall **145** extends between the first annular bead **105** and a first shoulder **155,** which is proximately associated with an edge of circumferential tread **140.** Second sidewall **150** extends between the second annular bead **110** and a second shoulder **160,** which is proximately associated with an opposite edge of circumferential tread **140.** In alternative embodiments (not shown), the sidewall includes one or more sidewall protector(s), electronic device(s), and/or cooling fin(s).

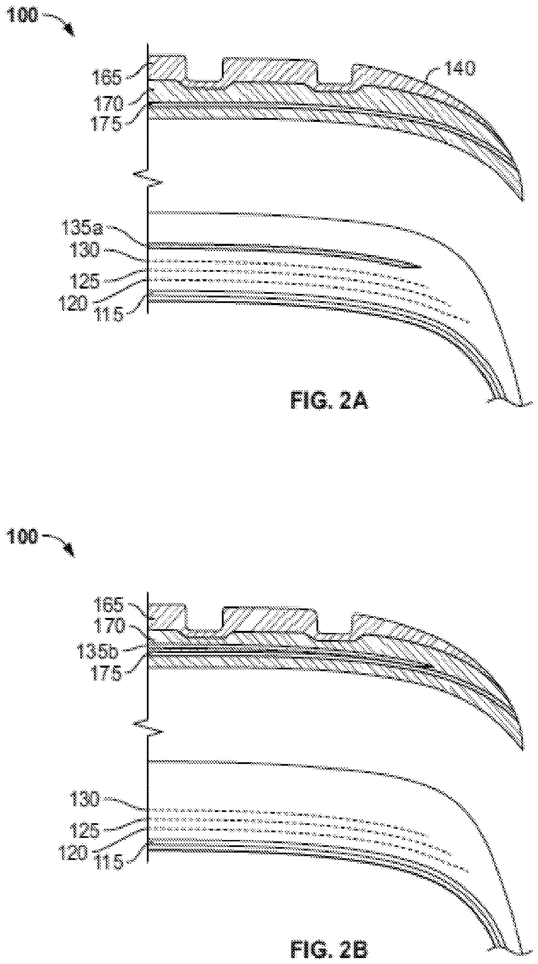

**Figure 2a** is a close-up cross-sectional view of the right half of tire **100.** Like elements from **Figure 1** have been identified with the same reference numerals.

In addition to **Figure 1****,** **Figure 2a** further shows circumferential tread **140** as comprising a tread cap **165,** a tread base **170,** and an undercushion **175.** Tread cap **165,** tread base **170,** and undercushion **175** all extend axially across a portion of body ply **115.**

Tread cap **165** is disposed radially upward with respect to tread base **170.** Tread cap **165** is the first tread layer that is worn as the tire is used. It may be formulated to possess particular performance attributes that are desirable when the tire is new. Tread base **170** is the second tread layer that is worn as the tire is used. It may be formulated to possess particular performance attributes that are desirable when the tire is worn. In one example, the first tread layer is formulated to maximize rolling resistance and the second tread layer is formulated to maximize wet traction. As one of ordinary skill in the art will understand, the tread cap and tread base can be co-extruded. In an alternative embodiment (not shown), the tread cap and tread base are a unitary layer formed from a single material.

Tread base **170** is disposed radially between tread cap **150** and undercushion **175.** Undercushion **175** provides a thin layer of material that enhances ride comfort and absorbs vibration and strain in the tire. As one of ordinary skill in the art will understand, a laminate and an undercushion have different physical and dynamic mechanical properties. For example, a laminate will typically have a lower tan δ and is less stiff in comparison to an undercushion. Further, the laminate will typically have less carbon black content and will utilize a different type of carbon black.

As shown in **Figure 2a****,** undercushion **175** is disposed radially between tread base 170 and laminate **135a.** As one of ordinary skill in the art will understand, the additional rubber that surrounds laminate **135a,** such as the rubber that would be present in a green tire, a partially cured tire, or a previously cured tire is not explicitly labeled. Thus, as shown in **Figure 2a****,** laminate **135a** and undercushion **175** do not directly contact each other. In an alternative embodiment (not shown), the laminate directly contacts a portion of the undercushion. In another alternative embodiment (also not shown), the tread cap and tread base are combined in one layer.

Although not explicitly shown in **Figure 2a****,** laminate **135a** has a radial height (*i.e.,* a thickness) between 75% and 125% of the radial height of the third annular belt. In a specific embodiment (not shown), the laminate has a radial height between 90% and 110% of the third annular belt. In one embodiment, the laminate has a thickness between 0.5 and 10.0 mm. In a specific embodiment, the laminate has a thickness between 1.0 and 3.0 mm. In another specific embodiment, the laminate has a thickness between 1.5 and 2.5 mm.

**Figure 2b** is a close-up cross-sectional view of an alternative embodiment of the tire embodiment depicted in **Figure 2a****.** The **Figure 2b** embodiment is substantially the same as the **Figure 2a** embodiment, except for the differences discussed below. In this embodiment, laminate **135b** is disposed radially between tread base **170** and undercushion **175.** Thus, as depicted in **Figure 2b****,** laminate **135b** is disposed in circumferential tread **140.** In an alternative embodiment (not shown), the laminate is disposed radially upward of the undercushion, the laminate directly contacts the undercushion. The laminate and undercushion may be provided separately from the circumferential tread.

In a particular embodiment (not shown), tire **100** has a section width between 215 and 450 mm, an aspect ratio between 50 and 90, and a radius between 38,1 cm (15 inch) and 73,66 cm (29 inch).

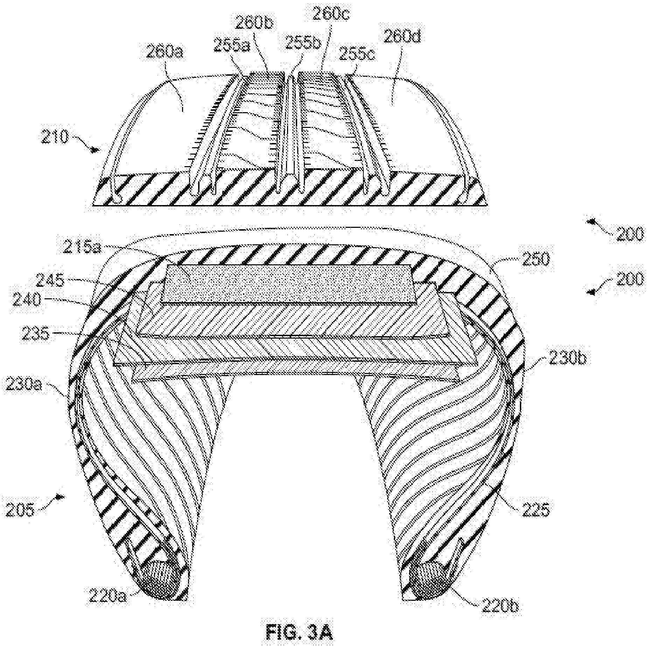

**Figure 3a** is a peel-away cross-sectional perspective view of one embodiment of a tire **200** including a laminate. As shown, tire **200** comprises a tire scaffold **205,** a tire tread **210,** and a low-rolling-resistance laminate **215a.**

Tire scaffold **205** can be a green tire (such as would be used in new-tire manufacturing), or it can be a casing or carcass (such as would be used in retread applications). As shown, tire scaffold **205** comprises a pair of annular beads **220a** and **220b,** a base ply **225,** and a pair of sidewalls **230a** and **230b.** The annular beads **220a** and **220b,** base ply **225,** and sidewalls **230a** and **230b** are substantially similar to the annular beads 105 and **110,** body ply **115,** and sidewalls **165** and **170** described with relation to **Figure 1****.**

Tire scaffold **205** further comprises a first reinforcing belt **235,** a second reinforcing belt **240,** and a third reinforcing belt **245.** Thus, as shown, tire scaffold **205** contains at least three reinforcing belts. In a particular embodiment, the tire scaffold contains exactly three belts. In a different embodiment, the tire scaffold contains exactly four belts. As one of ordinary skill in the art will understand, the reinforcing belts may contain metal (*e.g.,* steel) or synthetic cords. In an alternative embodiment (not shown), the tire scaffold further includes at least one cap ply.

A rubber casing **250** envelopes the components comprising tire scaffold **205.** In embodiments directed toward new manufacturing applications, rubber casing **250** begins as green rubber and may be partially or fully vulcanized. In embodiments directed toward retread applications, rubber casing **250** begins as cured rubber. The rubber casing may be buffed and repaired during the retreading process.

With continued reference to **Figure 3a** and tire **200,** tire **200** further includes a tire tread **210.** As shown, tire tread **210** includes circumferential grooves **255a, 255b,** and **255c** that divide the tire tread **210** into circumferential ribs **260a, 260b, 260c,** and **260d.** In an alternative embodiment (not shown), the tire tread includes at least two main circumferential grooves and at least three circumferential ribs. In another alternative embodiment, the tire tread includes four circumferential grooves and at least five circumferential ribs. As one of ordinary skill in the art will understand, the tire tread may have a variety of grooves and sipes.

With continued reference to **Figure 3a** and tire **200,** tire **200** further includes a laminate **215a.** As shown, laminate **215a** is disposed between the reinforcing belts and tire tread **210.** In particular, laminate **215a** is depicted as being disposed in tire scaffold **205.** Although not shown, the laminate may be provided in a variety of ways. In one embodiment, the laminate is provided by wrapping it around the tire scaffold or a surface of a tire component (*e.g*., without limitation, a belt or tire tread). In another embodiment, the laminate is provided by placing it on the tire scaffold or a tire component. Friction and pressure and/or an adhesive, tackifier, or cement may be used to affix the laminate to the tire scaffold or a tire component. In yet another embodiment, the laminate is coextruded with a tire component.

In embodiments directed toward new manufacturing applications, a layer (not shown) of adhesive, tackifier, or cement may be provided on either a green tire tread or green tire scaffold for adhering the green tire tread and green tire scaffold together. In embodiments directed toward retread applications, a layer (not shown) of adhesive, tackifier, or cement may be provided on either a retread or tire scaffold for adhering the retread and tire scaffold together. Additional retread processing further secures the retread to the tire scaffold. In embodiments directed to new manufacturing or retread applications, the laminate is not an adhesive, tackifier, or cement. Likewise, in embodiments directed to new manufacturing or retread applications, the laminate is not a tread antenna.

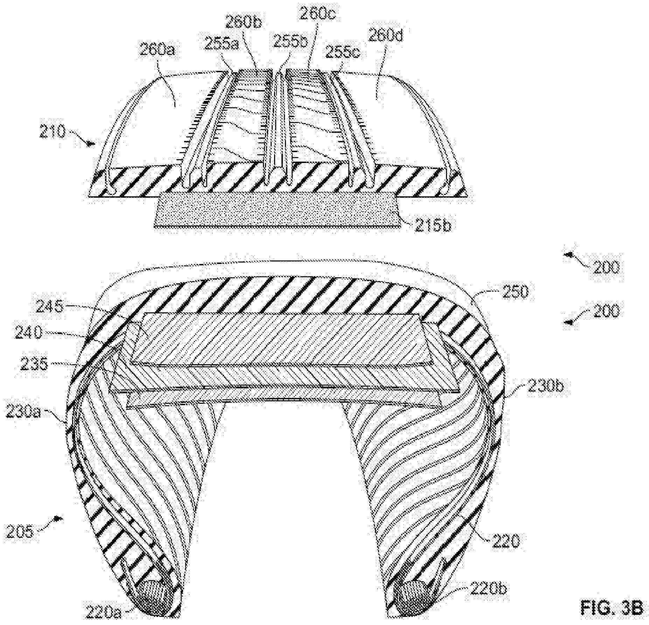

**Figure 3b** is a peel-away cross-sectional perspective view of an alternative embodiment of the tire depicted in **Figure 3a****.** In comparison to tire embodiment shown in **Figure 3a****,** in the embodiment shown in **Figure 3b****,** laminate **215b** is disposed on the underside of tire tread **210.** Thus, in retread embodiments, the laminate can be sold with the retread-*i.e*., separately from the casing.

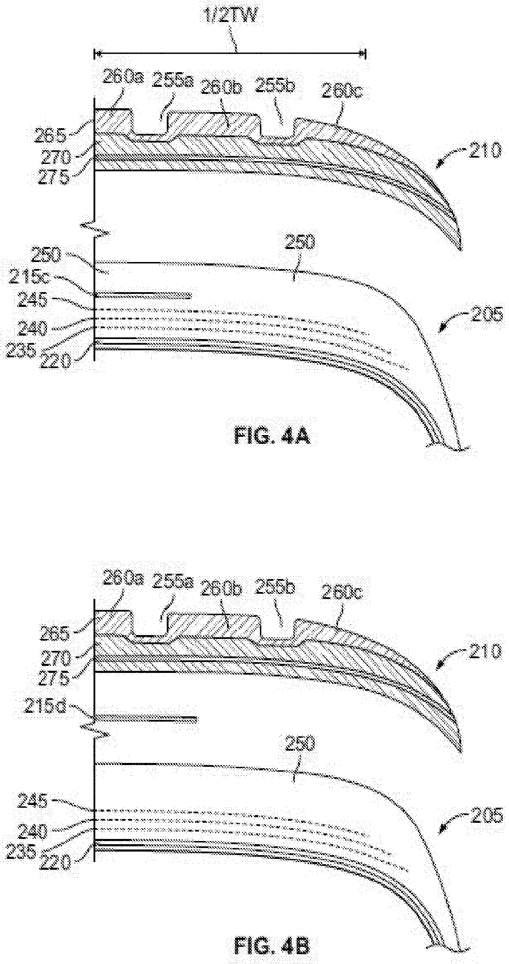

**Figure 4a** is a close-up cross-sectional view of an alternative embodiment of the tire **200,** which is depicted in **Figure 3a****.**

In addition to **Figure 3a****,** **Figure 4a** further shows tire tread **210** as comprising a tread cap **265,** a tread base **270,** and an undercushion **275.** Tread cap **265** is disposed radially upward with respect to tread base **270.** Tread base **270** is disposed radially between tread cap **265** and undercushion **275.** Tread cap **265,** tread base **270,** and undercushion **275** all extend axially across a portion of base ply **225.** The tread cap **265,** tread base **270,** and undercushion **275** are substantially similar to the tread cap **165,** tread base **170,** and undercushion **175** described with relation to **Figure 1****.**

**Figure 4a** also shows laminate **215c** disposed within tire scaffold **205** and enveloped by rubber casing **250.** In an alternative embodiment (not shown), the laminate is partially enveloped by the rubber casing. In particular tire embodiments having three reinforcing belts, the laminate may be disposed radially above the third reinforcing belt. In differing tire embodiments-*e.g*., in known tire designs having four reinforcing belts-the laminate may replace the fourth reinforcing belt.

In the embodiment shown in **Figure 4a****,** laminate **215c** extends axially over a portion of the third reinforcing belt **245.** In particular, in **Figure 4a****,** laminate **215c** is depicted as extending over 30% of one half of the tread width (½ **TW**). In one alternative embodiment (not shown), the laminate has an axial width that spans at least two main circumferential grooves (as measured from the lowest point of the groove). In another alternative embodiment, the laminate has an axial width 20-45% of the tread width and crosses the tire equator (the axial center of the tire). In yet another embodiment, the laminate has an axial width 20-45% of the section width and crosses the tire equator (the axial center of the tire). In a different alternative embodiment, the laminate has an axial width between 70 and 220 mm.

**Figure 4b** is a close-up cross-sectional view of an alternative embodiment of the tire embodiment depicted in **Figure 4a****.** In comparison to tire embodiment shown in **Figure 4a****,** in the embodiment shown in **Figure 4b****,** laminate **215d** is disposed on the underside of tire tread **210.** Thus, in tire **200,** laminate **215d** is also disposed radially between the reinforcing belts and the tread base.

In a particular embodiment (not shown), tire **200** has a section width between 215 and 450 mm, an aspect ratio between 50 and 90, and a radius between 38,1 cm (15 inch) and 73,66 cm (29 inch).

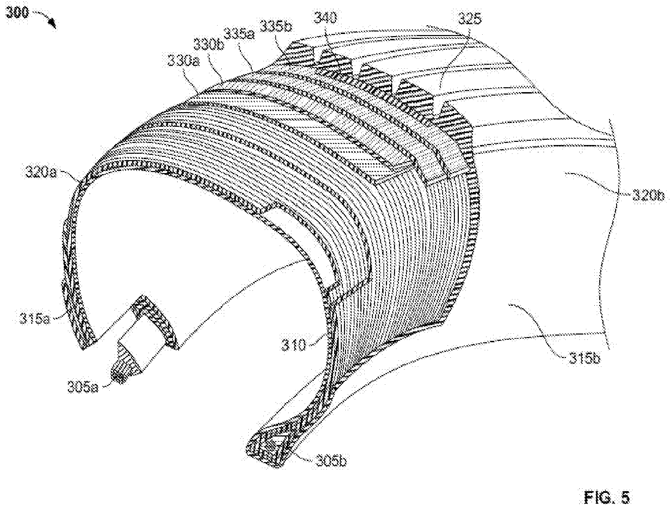

**Figure 5** is a peel-away cross-sectional perspective view of an embodiment of a tire **300** including a laminate. As one of ordinary skill in the art will understand, **Figure 5** depicts a passenger/light truck (PLTD) tire.

As shown, tire **300** includes a first annular bead **305a,** a second annular bead **305b,** a body ply **310,** a first sidewall **315a,** a second sidewall **315b,** a first shoulder **320a,** a second shoulder **320b,** and a circumferential tread **325.** While these components are similar to the beads, body ply, sidewalls, shoulders, and treads described above, one of ordinary skill in the art will appreciate that the components shown in **Figure 5** are configured for passenger/light truck applications. In alternative embodiments (not shown), the components are configured for non-PLTD tire applications. Suitable exemplary non-PLTD tire applications include, without limitation, agricultural tires, tires used on construction vehicles, and tires used in mining applications.

Circumferential tread **325** is disposed radially above the reinforcing belts **330a** and **330b.** Although not explicitly shown, one skilled in the art will understand that the circumferential tread may further comprise a tread cap, tread base, and undercushion, all of which extend axially across a portion of the body ply. In an alternative embodiment (also not shown), the circumferential tread consists of two layers (*e.g*., without limitation, a tread cap and a tread base). In yet another alternative embodiment, the circumferential tread consists of exactly one layer.

With continued reference to **Figure 5****,** tire **300** includes a first reinforcing belt **330a** and a second reinforcing belt **330b.** First reinforcing belt **330a** is disposed radially above body ply **310** and extends axially across a portion of body ply **310.** Second reinforcing **330b** belt is disposed radially above the first reinforcing belt **330a** and extends axially across a portion of the body ply **310.** In an alternative embodiment (not shown), the tire further comprises a third reinforcing belt that is disposed radially above the second reinforcing belt and extends axially across a portion of the body ply.

Tire **300** further includes cap plies **335a** and **335b.** First cap ply **335a** is disposed radially upward of reinforcing belts **330a** and **330b** and extends axially across a portion of body ply **310.** Second cap ply **335b** is disposed radially upward of first cap ply **335a** and extends axially across a portion of body ply **310.**

Tire **300** also includes a laminate **340.** As shown, the laminate **340** is a thin layer of material that primarily extends circumferentially and axially. In **Figure 5****,** laminate **340** extends axially across at least 20% of the tire's section width. Additionally, laminate **340** is disposed axially over the middle third of a tread width. In an alternative embodiment (not shown), the laminate extends across at least 40% of the tire's section width.

As shown, laminate **340** is disposed radially upward of the cap plies **335a** and **335b.** In an alternative embodiment (not shown), the laminate is disposed radially below the cap plies. In another alternative embodiment, the laminate is disposed radially between the cap plies.

**Figure 5****,** laminate **340** extends axially across 20-50% of the tire's section width. Additionally, laminate **340** is disposed axially over the middle third of a tread width. In an alternative embodiment (not shown), the laminate extends across at least 40-80% of the tire's section width.

As one of ordinary skill in the art will understand, the tire embodiments of the present disclosure may be used in truck-and-bus-radial (TBR), retread, heavy-duty, and PLTD tire applications.

Without limitation, exemplary TBR and heavy-duty tire sizes include tires having a section width between 215 and 460 mm, an aspect ratio between 50 and 90, and a radius between 38,1 cm (15 inch) and 73,66 cm (29 inch). Specific exemplary section widths include 295, 315, 425, and 445 mm; specific exemplary aspect ratios include 60, 65, 75, 80, 85, and 90; and specific exemplary radiuses include 55,88 cm, 57,15 cm, 60,96 cm and 63,5 cm (22, 22.5, 24 and 25 inches).

Without limitation, exemplary PLTD tire sizes include tires having a section width between 200 and 270 mm, an aspect ratio between 30 and 85, and a radius between 38,1 cm and 60,96 cm (15 and 24 inches). Specific exemplary section widths include 215, 235, and 265 mm; specific exemplary aspect ratios include 50, 65, 75, 80, and 85; and specific exemplary radiuses include 40,64 cm, 43,18 cm and 45,72 cm (16, 17 and 18 inches).

While the disclosure uses the term laminate, alternative terms may also be used to describe the invention without departing from the scope of the applicant's general inventive concept. Three such alternative terms include, without limitation, lamella, membrane, and overlay.

To the extent that the term "includes" or "including" is used in the specification or the claims, it is intended to be inclusive in a manner similar to the term "comprising" as that term is interpreted when employed as a transitional word in a claim. Furthermore, to the extent that the term "or" is employed (*e.g.,* A or B) it is intended to mean "A or B or both." When the applicants intend to indicate "only A or B but not both" then the term "only A or B but not both" will be employed. Thus, use of the term "or" herein is the inclusive, and not the exclusive use. *See* Bryan A. Garner, A Dictionary of Modern Legal Usage 624 (2d. Ed. 1995). Also, to the extent that the terms "in" or "into" are used in the specification or the claims, it is intended to additionally mean "on" or "onto." Furthermore, to the extent the term "connect" is used in the specification or claims, it is intended to mean not only "directly connected to," but also "indirectly connected to" such as connected through another component or components.

While the present disclosure has been illustrated by the description of embodiments thereof, and while the embodiments have been described in considerable detail, it is not the intention of the applicants to restrict or in any way limit the scope of the appended claims to such detail. Additional advantages and modifications will readily appear to those skilled in the art. Therefore, the disclosure, in its broader aspects, is not limited to the specific details, the representative apparatus and method, and illustrative examples shown and described. Accordingly, departures may be made from such details without departing from the scope of the applicant's general inventive concept. The scope of the invention is therefore only limited by the appended claims.

## Claims

1. A tire (100, 200, 300) comprising:
a first annular bead (105, 220a, 305a) and a second annular bead (110, 220b, 305b);
a body ply (115, 225, 310) extending between the first annular bead (105, 220a, 305a) and the second annular bead (110, 220b, 305b);
a belt package, disposed radially above the body ply (115, 225, 310), the belt package comprising a first annular belt (120, 235, 330a), a second annular belt (125, 240, 330b), and a third annular belt (130, 245), all of which extend axially across a portion of the body ply (115, 225, 310);
a circumferential tread (140, 210, 325), disposed radially above the third annular belt (130, 245), comprising a tread cap (165, 265), tread base (170, 270), and undercushion (175, 275), all of which extend axially across a portion of the body ply (115, 225, 310);
a first sidewall (145, 230a, 315a) extending between the first annular bead (105, 220a, 305a) and a first shoulder (155, 320a), the first shoulder (155, 320a) being associated with the circumferential tread (140, 210, 325); and
a second sidewall (150, 230b, 315b) extending between the second annular bead (110, 220b, 305b) and a second shoulder (160, 320b), the second shoulder (160, 320b) being associated with the circumferential tread (140, 210, 325),
**characterized by**
an annular lamella (135a, 135b, 215a, 215b, 215c, 215d, 340) disposed radially between the third annular belt (130, 245) and the tread base (170, 270), and extending axially across at least 50% of the tread width, wherein the lamella (135a, 135b, 215a, 215b, 215c, 215d, 340) has a tan δ of 0.04 - 0.09, wherein tan δ is determined according to the testing methods described in ASTM D5992 - 96 ("Standard Guide for Dynamic Testing of Vulcanized Rubber and Rubber-Like Materials Using Vibratory Methods").

2. The tire (100, 200, 300) of claim 1, wherein the belt package lacks a fourth annular belt.

3. The tire (100, 200, 300) of claim 1, wherein the lamella (135a, 135b, 215a, 215b, 215c, 215d, 340) is disposed radially between the third annular belt (130, 245) and the undercushion (175, 275).

4. The tire (100, 200, 300) of claim 1, wherein the lamella (135a, 135b, 215a, 215b, 215c, 215d, 340) is a nonviscous, vulcanized polymer.

5. The tire (100, 200, 300) of claim 1, wherein the lamella (135a, 135b, 215a, 215b, 215c, 215d, 340) has a thickness between 75% and 125% of the third annular belt (130, 245).

6. The tire (100, 200, 300) of claim 1, wherein the lamella (135a, 135b, 215a, 215b, 215c, 215d, 340) has a thickness between 1.0 and 3.0 mm.

7. The tire (100, 200, 300) of claim 1, wherein the lamella (135a, 135b, 215a, 215b, 215c, 215d, 340) has an axial width that is between 50 and 80% of a tread width (TW).

8. The tire (100, 200, 300) of claim 1, wherein the lamella (135a, 135b, 215a, 215b, 215c, 215d, 340) is disposed radially between the tread base (170, 270) and a rubber casing. (250)

9. The tire (100, 200, 300) of claim 1, wherein the lamella (135a, 135b, 215a, 215b, 215c, 215d, 340) is affixed to the circumferential tread (140, 210, 325).

10. The tire (100, 200, 300) of claim 1, wherein the tire (100, 200, 300) has a section width between 280 and 460 mm.

11. The tire (100, 200, 300) of claim 1, wherein the lamella (135a, 135b, 215a, 215b, 215c, 215d, 340) has an axial width that spans at least two main circumferential grooves (255a, 255b, 255c).

12. A method of making a tire (100, 200, 300) comprising:
providing a first annular bead (105, 220a, 305a) and a second annular bead (110, 220b, 305b);
extending a body ply (115, 225, 310) between the first annular bead (105, 220a, 305a) and the second annular bead (110, 220b, 305b);
placing a first reinforcing belt (120, 235, 330a) radially above the body ply (115, 225, 310) and axially across a portion of the body ply (115, 225, 310);
placing a second reinforcing belt (125, 240, 330b) radially above the first reinforcing belt (120, 235, 330a) and axially across a portion of the body ply (115, 225, 310);
placing a circumferential tread (140, 210, 325) radially above the reinforcing belts, wherein the circumferential tread (140, 210, 325) includes a tread cap (165, 265), tread base (170, 270), and undercushion (175, 275);
extending a first sidewall (145, 230a, 315a) between the first annular bead (105, 220a, 305a) and a first shoulder (155, 320a), the first shoulder (155, 320a) being associated with the circumferential tread;
extending a second sidewall (150, 230b, 315b) between the second annular bead (110, 220b, 305b) and a second shoulder (160, 320b), the second shoulder (160, 320b) being associated with the circumferential tread (140, 210, 325); and
placing an overlay (135a, 135b, 215a, 215b, 215c, 215d, 340) radially above the reinforcing belts and axially across at least 20% of a tire section width,
**characterized in that**
the overlay (135a, 135b, 215a, 215b, 215c, 215d, 340) has a tan δ of 0.04 - 0.09, wherein tan δ is determined according to the testing methods described in ASTM D5992 - 96 ("Standard Guide for Dynamic Testing of Vulcanized Rubber and Rubber-Like Materials Using Vibratory Methods").

13. The method of claim 12, wherein the overlay (135a, 135b, 215a, 215b, 215c, 215d, 340) has a uniform stiffness.

14. The method of claim 12, wherein the step of placing the overlay (135a, 135b, 215a, 215b, 215c, 215d, 340) includes placing the overlay (135a, 135b, 215a, 215b, 215c, 215d, 340) axially over the middle third of a tread width (TW).

15. The method of claim 12, further comprising placing a third reinforcing belt (130, 245) radially above the second reinforcing belt (125, 240, 330b) and axially across a portion of the body ply (115, 225, 310).

## Patentansprüche

1. Reifen (100, 200, 300), umfassend:
einen ersten ringförmigen Wulst (105, 220a, 305a) und einen zweiten ringförmigen Wulst (110, 220b, 305b);
eine Karkassenlage (115, 225, 310), die sich zwischen dem ersten ringförmigen Wulst (105, 220a, 305a) und dem zweiten ringförmigen Wulst (110, 220b, 305b) erstreckt;
ein Gürtelpaket, das radial über der Karkassenlage (115, 225, 310) angeordnet ist, wobei das Gürtelpaket einen ersten ringförmigen Gürtel (120, 235, 330a), einen zweiten ringförmigen Gürtel (125, 240, 330b) und einen dritten ringförmigen Gürtel (130, 245) umfasst, die sich alle axial über einen Abschnitt der Karkassenlage (115, 225, 310) erstrecken;
eine Umfangslauffläche (140, 210, 325), die radial über dem dritten ringförmigen Gürtel (130, 245) angeordnet ist, umfassend ein Laufflächenoberteil (165, 265), eine Laufflächenbasis (170, 270) und ein Unterpolster (175, 275), die sich alle axial über einen Abschnitt der Karkassenlage (115, 225, 310) erstrecken;
eine erste Seitenwand (145, 230a, 315a), die sich zwischen dem ersten ringförmigen Wulst (105, 220a, 305a) und einer ersten Schulter (155, 320a) erstreckt, wobei die erste Schulter (155, 320a) der Umfangslauffläche (140, 210, 325) zugeordnet ist; und
eine zweite Seitenwand (150, 230b, 315b), die sich zwischen dem zweiten ringförmigen Wulst (110, 220b, 305b) und einer zweiten Schulter (160, 320b) erstreckt, wobei die zweite Schulter (160, 320b) der Umfangslauffläche (140, 210, 325) zugeordnet ist,
**gekennzeichnet durch**
eine ringförmige Lamelle (135a, 135b, 215a, 215b, 215c, 215d, 340), die radial zwischen dem dritten ringförmigen Gürtel (130, 245) und der Laufflächenbasis (170, 270) angeordnet ist und sich axial über mindestens 50 % der Laufflächenbreite erstreckt, wobei die Lamelle (135a, 135b, 215a, 215b, 215c, 215d, 340) einen tan δ von 0,04 - 0,09 aufweist, wobei tan δ nach den in ASTM D5992-96 ("Standard Guide for Dynamic Testing of Vulcanized Rubber and Rubber Like Materials Using Vibratory Methods") beschriebenen Prüfverfahren bestimmt wird.

2. Reifen (100, 200, 300) nach Anspruch 1, wobei dem Gürtelpaket ein vierter ringförmiger Gürtel fehlt.

3. Reifen (100, 200, 300) nach Anspruch 1, wobei die Lamelle (135a, 135b, 215a, 215b, 215c, 215d, 340) radial zwischen dem dritten ringförmigen Gürtel (130, 245) und dem Unterpolster (175, 275) angeordnet ist.

4. Reifen (100, 200, 300) nach Anspruch 1, wobei die Lamelle (135a, 135b, 215a, 215b, 215c, 215d, 340) ein nichtviskoses, vulkanisiertes Polymer ist.

5. Reifen (100, 200, 300) nach Anspruch 1, wobei die Lamelle (135a, 135b, 215a, 215b, 215c, 215d, 340) eine Dicke zwischen 75 % und 125 % des dritten ringförmigen Gürtels (130, 245) aufweist.

6. Reifen (100, 200, 300) nach Anspruch 1, wobei die Lamelle (135a, 135b, 215a, 215b, 215c, 215d, 340) eine Dicke zwischen 1,0 und 3,0 mm aufweist.

7. Reifen (100, 200, 300) nach Anspruch 1, wobei die Lamelle (135a, 135b, 215a, 215b, 215c, 215d, 340) eine axiale Breite aufweist, die zwischen 50 und 80 % einer Laufflächenbreite (TW) beträgt.

8. Reifen (100, 200, 300) nach Anspruch 1, wobei die Lamelle (135a, 135b, 215a, 215b, 215c, 215d, 340) radial zwischen der Laufflächenbasis (170, 270) und einer Kautschukummantelung (250) angeordnet ist.

9. Reifen (100, 200, 300) nach Anspruch 1, wobei die Lamelle (135a, 135b, 215a, 215b, 215c, 215d, 340) an der Umfangslauffläche (140, 210, 325) befestigt ist.

10. Reifen (100, 200, 300) nach Anspruch 1, wobei der Reifen (100, 200, 300) eine Querschnittsbreite zwischen 280 und 460 mm aufweist.

11. Reifen (100, 200, 300) nach Anspruch 1, wobei die Lamelle (135a, 135b, 215a, 215b, 215c, 215d, 340) eine axiale Breite aufweist, die mindestens zwei Hauptumfangsrillen (255a, 255b, 255c) überspannt.

12. Verfahren zum Herstellen eines Reifens (100, 200, 300), umfassend:
Bereitstellen eines ersten ringförmigen Wulstes (105, 220a, 305a) und eines zweiten ringförmigen Wulstes (110, 220b, 305b);
Erstrecken einer Karkassenlage (115, 225, 310) zwischen dem ersten ringförmigen Wulst (105, 220a, 305a) und dem zweiten ringförmigen Wulst (110, 220b, 305b);
Platzieren eines ersten Verstärkungsgürtels (120, 235, 330a) radial über der Karkassenlage (115, 225, 310) und axial über einen Abschnitt der Karkassenlage (115, 225, 310);
Platzieren eines zweiten Verstärkungsgürtels (125, 240, 330b) radial über dem ersten Verstärkungsgürtel (120, 235, 330a) und axial über einen Abschnitt der
Karkassenlage (115, 225, 310);
Platzieren einer Umfangslauffläche (140, 210, 325) radial über den Verstärkungsgürteln, wobei die Umfangslauffläche (140, 210, 325) eine Laufflächenoberteil (165, 265), eine Laufflächenbasis (170, 270) und ein Unterpolster (175, 275) einschließt;
Erstrecken einer ersten Seitenwand (145, 230a, 315a) zwischen dem ersten ringförmigen Wulst (105, 220a, 305a) und einer ersten Schulter (155, 320a), wobei die erste Schulter (155, 320a) der Umfangslauffläche zugeordnet ist;
Erstrecken einer zweiten Seitenwand (150, 230b, 315b) zwischen dem zweiten ringförmigen Wulst (110, 220b, 305b) und einer zweiten Schulter (160, 320b), wobei die zweite Schulter (160, 320b) der Umfangslauffläche (140, 210, 325) zugeordnet ist; und
Platzieren einer Auflage (135a, 135b, 215a, 215b, 215c, 215d, 340) radial über den Verstärkungsgürteln und axial über mindestens 20 % einer Reifenquerschnittsbreite,
**dadurch gekennzeichnet, dass**
die Auflage (135a, 135b, 215a, 215b, 215c, 215d, 340) einen tan δ von 0,04 - 0,09 aufweist, wobei tan δ nach den in ASTM D5992-96 ("Standard Guide for Dynamic Testing of Vulcanized Rubber and Rubber-Like Materials Using Vibratory Methods") beschriebenen Prüfverfahren bestimmt wird.

13. Verfahren nach Anspruch 12, wobei die Auflage (135a, 135b, 215a, 215b, 215c, 215d, 340) eine einheitliche Steifigkeit aufweist.

14. Verfahren nach Anspruch 12, wobei der Schritt des Platzierens der Auflage (135a, 135b, 215a, 215b, 215c, 215d, 340) das Platzieren der Auflage (135a, 135b, 215a, 215b, 215c, 215d, 340) axial über dem mittleren Drittel einer Laufflächenbreite (TW) einschließt.

15. Verfahren nach Anspruch 12, ferner umfassend das Platzieren eines dritten Verstärkungsgürtels (130, 245) radial über dem zweiten Verstärkungsgürtel (125, 240, 330b) und axial über einen Abschnitt der Karkassenlage (115, 225, 310).

## Revendications

1. Pneu (100, 200, 300) comprenant :
un premier talon annulaire (105, 220a, 305a) et un deuxième talon annulaire (110, 220b, 305b) ;
une nappe carcasse (115, 225, 310) s'étendant entre le premier talon annulaire (105, 220a, 305a) et le deuxième talon annulaire (110, 220b, 305b) ;
un ensemble ceinture, disposé radialement au-dessus de la nappe carcasse (115, 225, 310), l'ensemble ceinture comprenant une première ceinture annulaire (120, 235, 330a), une deuxième ceinture annulaire (125, 240, 330b), et une troisième ceinture annulaire (130, 245), dont toutes s'étendent axialement à travers une partie de la nappe carcasse (115, 225, 310) ;
une bande de roulement circonférentielle (140, 210, 325), disposée radialement au-dessus de la troisième ceinture annulaire (130, 245), comprenant une coiffe de bande de roulement (165, 265), une base de bande de roulement (170, 270), et un sous-tapis (175, 275), dont tous s'étendent axialement à travers une partie de la nappe carcasse (115, 225, 310) ;
un premier flanc (145, 230a, 315a) s'étendant entre le premier talon annulaire (105, 220a, 305a) et un premier épaulement (155, 320a), le premier épaulement (155, 320a) étant associé à la bande de roulement circonférentielle (140, 210, 325) ; et
un deuxième flanc (150, 230b, 315b) s'étendant entre le deuxième talon annulaire (110, 220b, 305b) et un deuxième épaulement (160, 320b), le deuxième épaulement (160, 320b) étant associé à la bande de roulement circonférentielle (140, 210, 325),
**caractérisé par**
une lamelle annulaire (135a, 135b, 215a, 215b, 215c, 215d, 340) disposée radialement entre la troisième ceinture annulaire (130, 245) et la base de bande de roulement (170, 270), et s'étendant axialement à travers au moins 50 % de la largeur de bande de roulement, dans lequel la lamelle (135a, 135b, 215a, 215b, 215c, 215d, 340) a une tan δ de 0,04 à 0,09, dans lequel la tan δ est déterminée selon les procédés d'essai décrits dans ASTM D5992 - 96 (« Standard Guide for Dynamic Testing of Vulcanized Rubber and Rubber-Like Materials Using Vibratory Methods » - Guide standard pour essais dynamiques de caoutchouc vulcanisé et de matériaux similaires au caoutchouc par des procédés vibratoires).

2. Pneu (100, 200, 300) selon la revendication 1, dans lequel l'ensemble ceinture est dépourvu d'une quatrième ceinture annulaire.

3. Pneu (100, 200, 300) selon la revendication 1, dans lequel la lamelle (135a, 135b, 215a, 215b, 215c, 215d, 340) est disposée radialement entre la troisième ceinture annulaire (130, 245) et le sous-tapis (175, 275).

4. Pneu (100, 200, 300) selon la revendication 1, dans lequel la lamelle (135a, 135b, 215a, 215b, 215c, 215d, 340) est un polymère vulcanisé non visqueux.

5. Pneu (100, 200, 300) selon la revendication 1, dans lequel la lamelle (135a, 135b, 215a, 215b, 215c, 215d, 340) a une épaisseur entre 75 % et 125 % de la troisième ceinture annulaire (130, 245).

6. Pneu (100, 200, 300) selon la revendication 1, dans lequel la lamelle (135a, 135b, 215a, 215b, 215c, 215d, 340) a une épaisseur entre 1,0 et 3,0 mm.

7. Pneu (100, 200, 300) selon la revendication 1, dans lequel la lamelle (135a, 135b, 215a, 215b, 215c, 215d, 340) a une largeur axiale qui est comprise entre 50 et 80 % d'une largeur de bande de roulement (TW).

8. Pneu (100, 200, 300) selon la revendication 1, dans lequel la lamelle (135a, 135b, 215a, 215b, 215c, 215d, 340) est disposée radialement entre la base de bande de roulement (170, 270) et une carcasse en caoutchouc. (250)

9. Pneu (100, 200, 300) selon la revendication 1, dans lequel la lamelle (135a, 135b, 215a, 215b, 215c, 215d, 340) est attachée à la bande de roulement circonférentielle (140, 210, 325).

10. Pneu (100, 200, 300) selon la revendication 1, dans lequel le pneu (100, 200, 300) a une largeur en coupe entre 280 et 460 mm.

11. Pneu (100, 200, 300) selon la revendication 1, dans lequel la lamelle (135a, 135b, 215a, 215b, 215c, 215d, 340) a une largeur axiale qui couvre au moins deux rainures circonférentielles principales (255a, 255b, 255c).

12. Procédé de fabrication d'un pneu (100, 200, 300) comprenant :
la fourniture d'un premier talon annulaire (105, 220a, 305a) et d'un deuxième talon annulaire (110, 220b, 305b) ;
l'extension d'une nappe carcasse (115, 225, 310) entre le premier talon annulaire (105, 220a, 305a) et le deuxième talon annulaire (110, 220b, 305b) ;
la mise en place d'une première ceinture de renfort (120, 235, 330a) radialement au-dessus de la nappe carcasse (115, 225, 310) et axialement à travers une partie de la nappe carcasse (115, 225, 310) ;
la mise en place d'une deuxième ceinture de renfort (125, 240, 330b) radialement au-dessus de la première ceinture de renfort (120, 235, 330a) et axialement à travers une partie de la nappe carcasse (115, 225, 310) ;
la mise en place d'une bande de roulement circonférentielle (140, 210, 325) radialement au-dessus des ceintures de renfort, dans lequel la bande de roulement circonférentielle (140, 210, 325) inclut une coiffe de bande de roulement (165, 265), une base de bande de roulement (170, 270), et un sous-tapis (175, 275) ;
l'extension d'un premier flanc (145, 230a, 315a) entre le premier talon annulaire (105, 220a, 305a) et un premier épaulement (155, 320a), le premier épaulement (155, 320a) étant associé à la bande de roulement circonférentielle ;
l'extension d'un deuxième flanc (150, 230b, 315b) entre le deuxième talon annulaire (110, 220b, 305b) et un deuxième épaulement (160, 320b), le deuxième épaulement (160, 320b) étant associé à la bande de roulement circonférentielle (140, 210, 325) ; et
la mise en place d'un recouvrement (135a, 135b, 215a, 215b, 215c, 215d, 340) radialement au-dessus des ceintures de renfort et axialement à travers au moins 20 % d'une largeur en coupe de pneu,
**caractérisé en ce que**
le recouvrement (135a, 135b, 215a, 215b, 215c, 215d, 340) a une tan δ de 0,04 à 0,09, dans lequel la tan δ est déterminée selon les procédés d'essai décrits dans ASTM D5992 - 96 (« Standard Guide for Dynamic Testing of Vulcanized Rubber and Rubber-Like Materials Using Vibratory Methods » - Guide standard pour essais dynamiques de caoutchouc vulcanisé et de matériaux similaires au caoutchouc par des procédés vibratoires).

13. Procédé selon la revendication 12, dans lequel le recouvrement (135a, 135b, 215a, 215b, 215c, 215d, 340) a une rigidité uniforme.

14. Procédé selon la revendication 12, dans lequel l'étape de mise en place du recouvrement (135a, 135b, 215a, 215b, 215c, 215d, 340) inclut la mise en place du recouvrement (135a, 135b, 215a, 215b, 215c, 215d, 340) axialement par-dessus le tiers central d'une largeur de bande de roulement (TW).

15. Procédé selon la revendication 12, comprenant en outre la mise en place d'une troisième ceinture de renfort (130, 245) radialement au-dessus de la deuxième ceinture de renfort (125, 240, 330b) et axialement à travers une partie de la nappe carcasse (115, 225, 310).
